# EUROPÄISCHE PATENTANMELDUNG

(11) **EP 1 205 100 A1**
(43) Veröffentlichungstag der Anmeldung: **15.05.2002**
(21) Anmeldenummer: 01126157.5
(22) Anmeldetag: 03.11.2001
(51) Int. Cl.: A01D 34/66

(54) **An einem Schlepper anbringbares Mähwerk**

(30) Priorität: 07.11.2000 DE 10055052
(71) Anmelder: Ziegler GmbH, 86554 Pöttmes (DE)
(72) Erfinder: Grenzebach, Hans, 97737 Gemünden/Main (DE)
(74) Vertreter: Patentanwälte Rehberg + Hüppe

(57) **Zusammenfassung**

Ein an einem Schlepper anbringbares Mähwerk (1) ist mit einem Tragarm (6) und einem sich im wesentlichen parallel und in vertikalem Abstand darunter erstreckenden Mähbalken (16) versehen. Der Mähbalken (16) ist mit einer Anzahl angetriebener scheibenförmiger Mähteller (15 bis 17) besetzt. Der Mähbalken (16) ist im Bereich des ersten innen liegenden Mähtellers (15) an dem Tragarm (6) abgestützt und im Bereich des letzten außen liegenden Mähtellers (17) über eine Balkenstütze (18) an dem Tragarm (6) aufgehängt. Der Antrieb für die Mähteller (15 bis 17) wird von einem am Tragarm (6) vorgesehenen Getriebe (11) auf den ersten Mähteller (15) und über eine getriebliche Verbindung im Mähbalken (16) auf die übrigen Mähteller übertragen. Der Mähbalken (16) ist um eine etwa horizontal in Fahrtrichtung (5) angeordnete Achse (10) beweglich an dem Tragarm (6) aufgehängt.

## Beschreibung

Die Erfindung betrifft ein an einem Schlepper anbringbares Mähwerk, mit einem Tragarm und einem sich im wesentlichen parallel und in vertikalem Abstand darunter erstreckenden Mähbalken, der mit einer Anzahl angetriebener scheibenförmiger Mähteller besetzt ist, wobei der Mähbalken im Bereich des ersten innen liegenden Mähtellers an dem Tragarm abgestützt ist, im Bereich des letzten außen liegenden Mähtellers über eine Balkenstütze an dem Tragarm aufgehängt ist und der Antrieb für die Mähteller von einem am Tragarm vorgesehenen Getriebe auf den ersten Mähteller und über eine getriebliche Verbindung im Mähbalken auf die übrigen Mähteller übertragen wird. Die Erfindung lässt sich bei solchen Mähwerken anwenden, die als Frontmähwerke vorne an einem Schlepper angebracht werden, bei denen sich der Tragarm meist in symmetrischer Anordnung über die Schlepperbreite erstreckt und direkt vom Schlepper getragen wird. Die Erfindung kann aber auch bei Heckmähwerken eingesetzt werden, bei denen der Tragarm von einem Schwingarm getragen ist und seitlich ausladend angeordnet ist.

Ein Mähwerk der eingangs beschriebenen Art ist aus der EP 0 337 909 B1 bekannt. Es handelt sich um ein an einem Schlepper anbringbares Heckmähwerk, mit einem hinten am Schlepper aufgenommenen Tragrahmen, einem dort schwenkbar aufgenommenen Schwingarm und einem schwenkbar bzw. aushebbar an dem Schwingarm gelagerten Tragarm. Im wesentlichen parallel und in vertikalem Abstand unter dem Tragarm ist ein Mähbalken vorgesehen, der mit einer Anzahl angetriebener scheibenförmiger Mähteller besetzt ist. Der Mähbalken ist im Bereich des ersten innen liegenden Mähtellers starr mit dem Tragarm verbunden und so fest an dem Tragarm abgestützt. Die starre Verbindung im Bereich des ersten innen liegenden Mähtellers ist doppelt ausgebildet. Sie sieht einerseits einen festen Träger und andererseits eine Verbindung über das Gehäuse eines Getriebes und eine darin gelagerte, sich im wesentlichen vertikal erstreckende Antriebswelle vor. Im Bereich des letzten außen liegenden Mähtellers ist der Mähbalken über eine Balkenstütze an dem Tragarm aufgehängt. Der Antrieb für die Mähteller wird von dem am Tragarm vorgesehenen Getriebe auf den ersten Mähteller und weiter über eine getriebliche Verbindung im Mähbalken auf die übrigen Mähteller übertragen.

Auch die DE 195 34 695 C2 oder die DE 30 34 213 C2 zeigt und beschreibt ein gattungsgemäßes Mähwerk in Form eines Heckmähwerks. Hier ist jedoch nur eine einfache starr ausgebildete feste Verbindung zwischen Mähbalken und Tragarm vorgesehen. Die feste Verbindung wird über das Gehäuse eines Getriebes erreicht, das vertikal über dem ersten innen liegenden Mähteller angeordnet ist und aus dem eine Antriebswelle nach unten herausragt, an dem der Mähteller angeschraubt ist, der wiederum im dem Mähbalken gelagert ist. Im Bereich des letzten außen liegenden Mähtellers ist auch hier eine Balkenstütze angeordnet. Damit wird auch hier ein im wesentlichen fester starrer Rahmen aus dem Tragarm, dem Gehäuse des Getriebes und der Antriebswelle, dem Mähbalken und der Balkenstütze geschaffen.

Der Erfindung liegt die Aufgabe zugrunde, ein Mähwerk der eingangs beschriebenen Art bereitzustellen, bei dem die Gefahr des Auftretens von Ermüdungsbrüchen beseitigt ist.

Erfindungsgemäß wird dies bei einem Mähwerk der eingangs beschriebenen Art dadurch erreicht, dass der Mähbalken um eine etwa horizontal in Fahrtrichtung angeordnete Achse beweglich an dem Tragarm aufgehängt ist.

Bei den bekannten Mähwerken ist der Mähbalken um die vertikale Achse der Antriebswelle begrenzt schwenkbar aufgehängt. Dies ermöglicht ein begrenztes Ausweichen des Mähbalkens in einer horizontalen Ebene, wodurch allerdings der starre Rahmen elastisch verformt wird. Es entsteht eine Torsion im Mähbalken und in den anderen Teilen des starren Rahmens. Außerdem wird der Mähbalken beim Auftreffen auf Bodenunebenheiten in vertikaler Richtung zum Schwingen und Auffedern angeregt. Dadurch wird die Antriebswelle auf Biegung beansprucht. Da dies während des Mähens geschieht, entsteht an der Antriebswelle eine Wechselbiegung, die zu Ermüdungsbrüchen führt. Diese Ermüdungsbrüche treten an der Antriebswelle, an den Flanschen zwischen Antriebswelle und Mähteller oder am Gehäuse des Getriebes auf. Auch die Schrauben an den Flanschen können abreißen. Der Schlepper muss höhere Antriebskräfte bereitstellen, um die Mähteller über die Antriebswelle anzutreiben.

Die Erfindung geht von dem Gedanken aus, den Mähbalken um eine etwa horizontal in Fahrtrichtung angeordnete Achse beweglich an dem Tragarm aufzuhängen, so dass der starre Rahmen gleichsam durch einen Gelenkzug ersetzt ist. Bei der etwa horizontal in Fahrtrichtung angeordneten Achse handelt es sich nicht um die Achse, um die der Tragarm und der Mähbalken gemeinsam ausgehoben bzw. aufgerichtet werden, sondern um eine zwischen Tragarm und Mähbalken angeordnete zusätzliche Achse, die in Form eines Gelenks, einer nachgiebigen Verbindung o. dgl. realisiert wird. Dies ist im Bereich des Mähbalkens der Fall, der im Bereich des inneren Mähtellers insbesondere an der Antriebswelle begrenzt schwenkbeweglich aufgehängt ist und im Bereich des letzten Mähtellers durch die Balkenstütze begrenzt federnd nachgiebig geführt ist. Der Mähbalken kann innen aber auch außerhalb der Antriebswelle an einem gesonderten Träger aufgehängt sein. Der Mähbalken kann damit in der Vertikalebene senkrecht zur Fahrtrichtung die von Bodenunebenheiten aufgezwungenen Bewegungen ausführen, ohne dass es zu Ermüdungsbrüchen kommt. Dies ist für große Arbeitsbreiten besonders bedeutungsvoll.

Wenn ein gesonderter Träger fehlt und der Mähbalken in Bereich des ersten Mähtellers nur an einer in einem Gehäuserohr gelagerten Antriebswelle an dem Tragarm aufgehängt ist, ist das die Antriebswelle umgebende Gehäuserohr um die etwa horizontal in Fahrtrichtung angeordnete Achse an dem Tragarm schwenkbeweglich aufgehängt. Da die Antriebswelle in dem Gehäuserohr gelagert ist, kann die Einheit aus Gehäuserohr und Antriebswelle den Bewegungen des Mähbalkens folgen.

Bei einem Heckmähwerk ist es vorteilhaft, wenn das die Antriebswelle umgebende Gehäuserohr über das Gehäuse des Getriebes um die etwa horizontal in Fahrtrichtung angeordnete Achse an dem Tragarm schwenkbeweglich aufgehängt ist. Bei einem Heckmähwerk ist an dieser Stelle üblicherweise ein Getriebe angeordnet. Eine Achse des Getriebes fällt dann mit der etwa horizontal in Fahrtrichtung angeordneten Achse an dem Tragarm zusammen, so dass eine Doppellagerung entsteht. Es ist ein Lager für die Rotation der Getriebewelle gebildet. Gleichzeitig und unabhängig davon kann der Mähbalken begrenzt verschwenken.

Zusätzlich kann die etwa horizontal in Fahrtrichtung angeordnete Achse noch mit einer Schwenkachse zusammenfallend angeordnet sein, um die die Einheit aus Tragarm, Antriebswelle, Mähbalken und Balkenstütze relativ zu einem Schwingarm hochschwenkbar ist.

Bei einem Frontmähwerk kann das die Antriebswelle umgebende Gehäuserohr um ein am Tragarm vorgesehenes Lager schwenkbar aufgehängt sein, wobei das Lager relativ zu einer oder mehreren Keilriemenscheiben auf dem Tragarm angeordnet ist. Die Achse der Keilriemenscheiben ist bevorzugt vertikal ausgerichtet, so dass die Keilriemen in einer horizontalen Ebene umlaufend angeordnet sind. Damit wird an dieser Stelle ein Winkelgetriebe vermieden. Die durch das Lager gebildete etwa horizontal in Fahrtrichtung angeordnete Achse an dem Tragarm schneidet die gemeinsame Achse der Keilriemenscheiben und der Antriebswelle.

Bei den verschiedenen Ausführungsformen des Mähwerks sollte die Balkenstütze jeweils in einer Vertikalebene senkrecht zur Fahrtrichtung federnd nachgiebig ausgebildet sein. Die Balkenstütze kann eine dünne Platte aus Federstahl sein, die mit ihrer Haupterstreckungsebene vertikal in Fahrtrichtung ausgerichtet angeordnet ist. Der Mähbalken kann aber auch an der Balkenstütze über ein Schwenklager beweglich aufgehängt sein. Die Balkenstütze kann dann ein Kardangelenk aufweisen, in der einfachsten Form ein Gelenk aus einem Gummiblock. Es ist notwendig, dass das Schwenklager so ausgebildet und angeordnet ist, dass es jedenfalls eine Bewegung um eine senkrecht zur Fahrtrichtung liegende horizontale Achse ermöglicht, um die schwenkbewegliche Lagerung des Mähbalkens im Bereich des innersten Mähtellers zu ergänzen.

Verschiedene Ausführungsformen der Erfindung werden nachfolgend weiter erläutert und beschrieben. Es zeigen:
- Fig. 1: eine Ansicht von hinten auf ein Heckmähwerk,
- Fig. 2: einen Schnitt gemäß der Linie II-II durch das Heckmähwerk gemäß Fig. 1,
- Fig. 3: eine Vergleichsskizze zum Stand der Technik und zum Anmeldungsgegenstand,
- Fig. 4: eine Frontansicht auf ein Frontmähwerk,
- Fig. 5: einen Schnitt gemäß der Linie V-V in Fig. 4,
- Fig. 6: eine Seitenansicht auf das Mähwerk im Bereich der Balkenstütze,
- Fig. 7: eine Draufsicht auf ein gezogenes Mähwerk,
- Fig. 8: eine Seitenansicht eines gezogenen Mähwerks, und
- Fig. 9: eine Seitenansicht auf eine weitere Ausführungsform eines gezogenen Mähwerks.

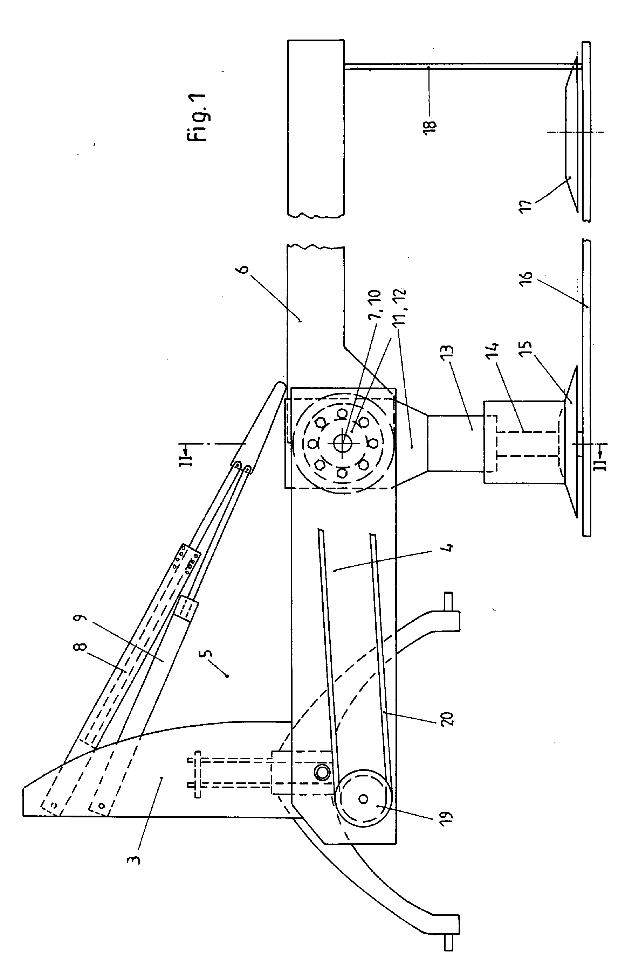

In Fig. 1 sind die für das Verständnis der Erfindung wesentlichen Teile eines Mähwerks 1 in Form eines Heckmähwerks 2 dargestellt. Das Heckmähwerk 2 ist auf einem Traggestell 3 aufgebaut, welches in bekannter Weise an der Dreipunkaufhängung eines Schleppers heckseitig befestigbar ist. Von dem Traggestell 3 erstreckt sich ein Schwingarm 4 etwa senkrecht zur Fahrtrichtung 5 und überbrückt mindestens die halbe Schlepperbreite. Im frei ausragenden Endbereich des Schwingarmes 4 ist ein Tragarm 6 um eine in Fahrtrichtung 5 liegende, sich etwa horizontal erstreckende Schwenkachse 7 schwenkbar vogesehen. Zwischen dem Traggestell 3 und dem Tragarm 6 ist eine Gewichtausgleichsfeder 8 und ein Hydraulikzylinder 9 angeordnet, um den Tragarm 6 mit den daranhängenden Teilen des Mähwerks um die Schwenkachse 7 zu Transportzwecken aufzurichten.

An dem Tragarm 6 ist um eine horizontal und in Fahrtrichtung 5 ausgerichtete Achse 10 das Gehäuse 11 eines Getriebes 12 schwenkbar aufgehängt. Die Schwenkachsen 7 und 10 können, wie Fig. 1 zeigt, zusammenfallend angeordnet sein, was hinsichtlich des zu übertragenden Antriebes Vorteile erbringt. Wichtig aber ist, dass das Gehäuse 11 gegenüber dem Tragarm 6 um die etwa horizontale in Fahrtrichtung 5 angeordnete Achse 10 schwenkbar ist. Das Gehäuse 11 des Getriebes 12 erstreckt sich in Form eines Gehäuserohres 13 von der Achse 10 nach unten. In dem Gehäuserohr 13 ist eine Antriebswelle 14 vorgesehen, mit der der innen liegende Mähteller 15 des Mähwerks 1 in Drehverbindung steht. Der Mähteller 15 ist auf einem Mähbalken 16 drehbar gelagert, der sich entsprechend der Länge des Tragarms 6 mit Abstand unter diesem quer zur Fahrtrichtung 5 nach außen erstreckt. Auf dem Mähbalken 16 sind eine Reihe von Mähtellern, je nach der Arbeitsbreite, angeordnet. An den innersten Mähteller 15 schließen nach außen mehrere weitere Mähteller an. Außen liegt ein Mähteller 17. In dem Mähbalken 16 ist eine getriebliche Verbindung für sämtliche Mähteller 15 bis 17 vorgesehen. Von dem äußeren freien Ende des Tragarms 6 erstreckt sich eine Balkenstütze 18 in vertikaler Richtung nach abwärts, an der das Ende des Mähbalkens 16 aufgehängt ist, welches den äußersten Mähteller 17 trägt.

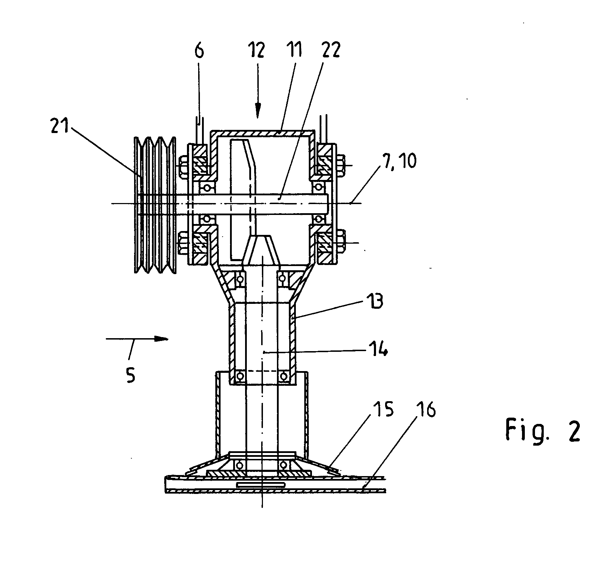

Der Antrieb des Mähwerks 1 erfolgt durch den Schlepper. Von diesem wird mit Hilfe einer Zapfwelle ein Drehmoment auf Keilriemenscheiben 19 übertragen. Über meist mehrere Keilriemen 20 werden Keilriemenscheiben 21 (Fig. 2) angetrieben. Die Keilriemenscheiben 21 sitzen auf einer Welle 22, die ebenfalls in der gemeinsamen Schwenkachse 7, 10 angeordnet und in das Innere des Gehäuses 11 des Getriebes 12 hineinführt. Mittels einer Kegelradstufe 23 wird der Antrieb auf die Antriebswelle 14 übertragen, die im Gehäuserohr 13 drehbar gelagert ist. Mit dem unteren Ende der Antriebswelle 14 ist der innen liegende Mähteller 15 verflanscht, der ansonsten im Mähbalken 16 drehbar gelagert ist. Damit ist erkennbar, dass das Gehäuse 11 mit dem Gehäuserohr 13 und der darin gelagerten Antriebswelle 14 gegenüber dem Tragarm 6 um die Achse 10 begrenzt verschwenkbar aufgehängt ist. Die Verschwenkbarkeit des Gehäuses 11 des Getriebes 12 und damit des Mähbalkens 16 um die Achse 10 relativ zum Tragarm 6 ist das wesentliche Merkmal des neuen Mähwerks 1, gleichgültig, ob die Schwenkachsen 10 und 7 zusammenfallen oder parallel zueinander in Fahrtrichtung 5, jedoch in Abstand zueinander, angeordnet sind.

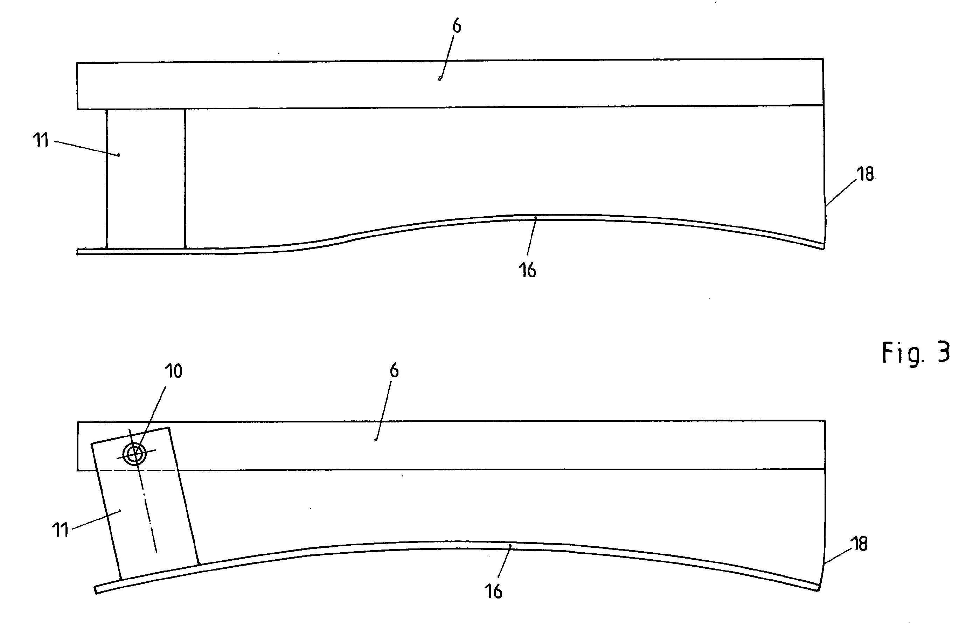

Fig. 3 verdeutlicht den wesentlichen Unterschied zwischen dem Stand der Technik und dem Anmeldungsgegenstand. Im oberen Bereich der Fig. 3 ist der Stand der Technik schematisch verdeutlicht. Durch die feste Verbindung des Gehäuses 11 des Getriebes 12 mit dem Tragarm 6 belastet jede Gestaltsänderung des Mähbalkens 16 das Gehäuse 11 und die darin angeordnete Antriebswelle 14 auf Wechselbiegung. Eine mögliche Biegeform des Mähbalkens 16 ist hier dargestellt. Am äußeren Ende wird der Mähbalken 16 über die Balkenstütze 18 geführt.

Im unteren Teil der Fig. 3 ist der Anmeldungsgegenstand prinzipiell verdeutlicht. Durch die um die Achse 10 schwenkbare Lagerung des Mähbalkens 16 relativ zum Tragarm 6 bleibt das Gehäuse 11 mit dem Gehäuserohr 13 und der darin befindlichen Antriebswelle frei von Biegekräften, wenn der Mähbalken 16 seine Gestalt ändert, was durch Bodenunebenheiten, Hindernisse und dgl. verursacht sein kann.

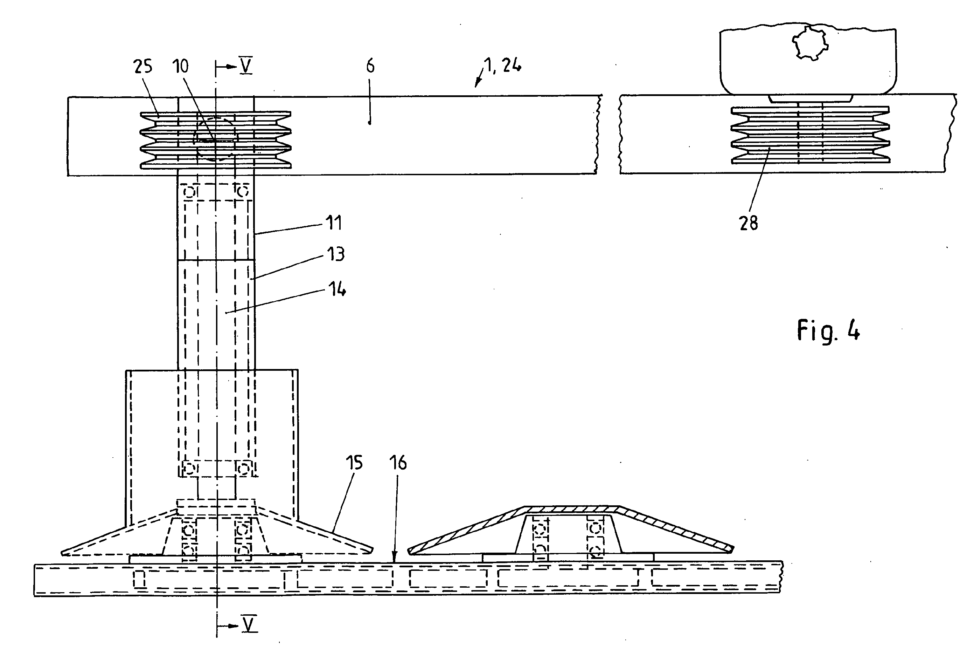

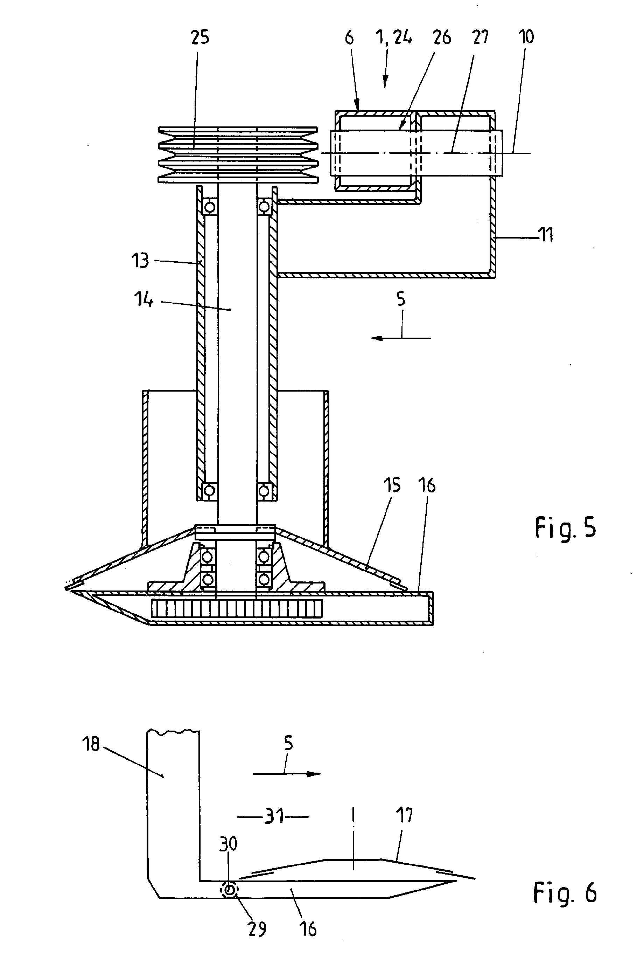

In den Fig. 4 und 5 ist ein Frontmähwerk 24 dargestellt, aus Übersichtlichkeitsgründen ebenfalls nur mit den für die Erfindung wesentlichen Teilen. Auch ein solches Frontmähwerk 24 weist den Tragarm 6 auf, der in der Regel symmetrisch vor dem Schlepper angeordnet ist. Der Tragarm 6 erstreckt sich somit im wesentlichen über die Schlepperbreite. Auch an dem Tragarm 6 ist das Gehäuse 11 mit Gehäuserohr 13 um die Achse 10 schwenkbar angeordnet. In dem Gehäuserohr 13 ist auch hier die Antriebswelle 14 drehbar gelagert, mit der der Antrieb der Mähteller nach unten in den Mähbalken 16 übertragen wird. Auch hier dient die Antriebswelle 14 unmittelbar zum Antrieb des innen liegenden Mähtellers 15. Über einen Getriebezug, der in der Regel aus einem Satz Zahnrädern besteht, werden auch die übrigen Mähteller bis zum außen liegenden Mähteller 17 angetrieben. Am oberen Ende der Antriebswelle 14 sind Keilriemenscheiben 25 aufgesetzt, so dass die zugehörigen Keilriemen hier etwa in einer horizontalen Ebene umlaufend angeordnet sind. Auf diese Weise erübrigt sich bei einem Frontmähwerk 24 die Anordnung einer Kegelradstufe. Die Schwenkbarkeit des Gehäuses 11 mit dem Gehäuserohr 13 und der Antriebswelle 14 um die Achse 10 wird mit Hilfe eines Lagers 26 (Fig. 5) herbeigeführt, welches eine Schwenkachse 27 aufweist, die die begrenzt verschwenkbare Anordnung des Gehäuses 11 gegenüber dem Tragarm 6 ermöglicht.

Fig. 4 lässt auch weitere Teile des Antriebes erkennen, so Keilriemenscheiben 28, die den Antrieb über nicht dargestellte Keilriemen auf die Keilriemenscheiben 25 übertragen.

Fig. 6 zeigt schließlich die Ausbildung der Balkenstütze 18 am äußeren freien Ende des Mähbalkens 16, also im Bereich des Mähtellers 17. Die Balkensütze 18 bzw. deren wesentlicher Teil kann plattenförmig ausgebildet sein und sich mit ihrer Haupterstreckungsebene in einer Vertikalebene 31 in Fahrtrichtung 5 erstrecken. Der Mähbalken 16 ist hier mit Hilfe eines Schwenklagers 29 begrenzt schwenkbar aufgehängt. Das Schwenklager 29 besitzt eine Achse 30, die senkrecht zur Vertikalebene 31 etwa horizontal ausgerichtet angeordnet ist. Damit sind Bewegungen des Mähbalkens 16 im Bereich des äußersten Mähtellers 17 relativ zur Balkenstütze 18 möglich. Es kann an dieser Stelle auch ein Kardangelenk vorgesehen sein. In der einfachsten Form genügt ein Gummigelenk.

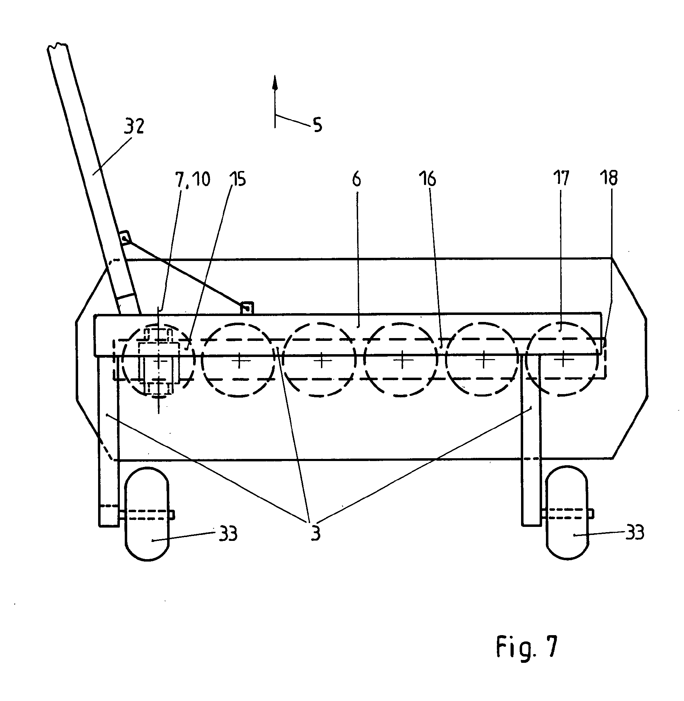

Unter einem an einem Schlepper anbringbaren Mähwerk 1 werden auch gezogene Mähwerke verstanden, wie sie anhand der Fig. 7 bis 9 beispielhaft verdeutlicht sind. Das gezogene Mähwerk 1 gemäß Fig. 4 weist ein Traggestell 3 auf, welches eine Deichsel 32 besitzt und ansonsten auf Laufrädern 33 abgestützt ist. Ein Tragarm 6 erstreckt sich quer zur Fahrtrichtung 5. An ihm ist die Schwenkachse 7 und die Achse 10 verwirklicht. Der Antrieb wird in diesem Bereich des Mähtellers 15 nach unten geführt. Dort ist auch der Mähbalken 16 angeschlossen, der außen den letzten Mähteller 17 trägt und über die Balkenstütze 18 an dem Tragarm 6 aufgehängt ist.

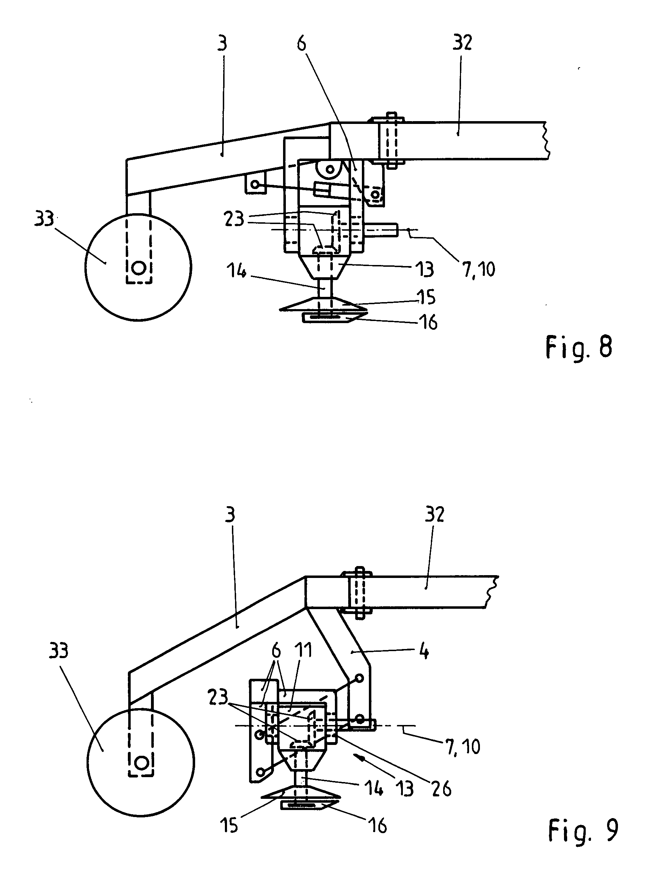

Aus Fig. 8 ist in der Seitenansicht erkennbar, wie der Tragarm 6 an dem Traggestell 3 angeordnet ist. Die Schwenkachse 7 und die Achse 10 sind hier zusammenfallend angeordnet und bilden zugleich eine Achse für das eine Kegelrad der Kegelradstufe 23, mit deren Hilfe der Antrieb auf die im Gehäuserohr angeordnete Antriebswelle 14 übertragen wird, mit deren unteren Ende der Mähteller 15 verbunden ist.

Die aus Fig. 9 erkennbare Ausführungsform des gezogenen Mähwerks 1 ist etwas abgewandelt ausgebildet. Es ist hier ein Schwingarm 4 an dem Traggestell 3 vorgesehen, der hier jedoch fest mit dem Traggestell 3 verbunden ist. Die Schwenkachse 7 und die Achse 10 sind auch hier in Fahrtrichtung ausgerichtet zusammenfallend angeordnet. Der Tragarm 6 erstreckt sich über die Arbeitsbreite.

### BEZUGSZEICHENLISTE

- 1 -: Mähwerk
- 2 -: Heckmähwerk
- 3 -: Traggestell
- 4 -: Schwingarm
- 5 -: Fahrtrichtung
- 6 -: Tragarm
- 7 -: Schwenkachse
- 8 -: Gewichtsausgleichsfeder
- 9 -: Hydraulikzylinder
- 10 -: Achse

- 11 -: Gehäuse
- 12 -: Getriebe
- 13 -: Gehäuserohr
- 14 -: Antriebswelle
- 15 -: Mähteller
- 16 -: Mähbalken
- 17 -: Mähteller
- 18 -: Balkenstütze
- 19 -: Keilriemenscheibe
- 20 -: Keilriemen

- 21 -: Keilriemenscheibe
- 22 -: Welle
- 23 -: Kegelradstufe
- 24 -: Frontmähwerk
- 25 -: Keilriemenscheibe
- 26 -: Lager
- 27 -: Schwenkachse
- 28 -: Keilriemenscheibe
- 29 -: Schwenklager
- 30 -: Achse

- 31 -: Vertikalebene
- 32 -: Deichsel
- 33 -: Laufrad

## Patentansprüche

1. An einem Schlepper anbringbares Mähwerk (1), mit einem Tragarm (6) und einem sich im wesentlichen parallel und in vertikalem Abstand darunter erstreckenden Mähbalken (16), der mit einer Anzahl angetriebener scheibenförmiger Mähteller (15 bis 17) besetzt ist, wobei der Mähbalken (16) im Bereich des ersten innen liegenden Mähtellers (15) an dem Tragarm (6) abgestützt ist, im Bereich des letzten außen liegenden Mähtellers (17) über eine Balkenstütze (18) an dem Tragarm (6) aufgehängt ist und der Antrieb für die Mähteller (15 bis 17) von einem am Tragarm (6) vorgesehenen Getriebe (11) auf den ersten Mähteller (15) und über eine getriebliche Verbindung im Mähbalken (16) auf die übrigen Mähteller übertragen wird, **dadurch gekennzeichnet, dass** der Mähbalken (16) um eine etwa horizontal in Fahrtrichtung (5) angeordnete Achse (10) beweglich an dem Tragarm (6) aufgehängt ist.

2. Mähwerk nach Anspruch 1, **dadurch gekennzeichnet, dass** der Mähbalken (16) in Bereich des ersten Mähtellers (15) an einer in einem Gehäuserohr (13) gelagerten Antriebswelle (14) an dem Tragarm (6) aufgehängt ist und dass das die Antriebswelle (14) umgebende Gehäuserohr (13) um die etwa horizontal in Fahrtrichtung (5) angeordnete Achse (10) an dem Tragarm (6) schwenkbeweglich aufgehängt ist.

3. Mähwerk nach Anspruch 1 oder 2, **dadurch gekennzeichnet, dass** bei einem Heckmähwerk (2) das die Antriebswelle (14) umgebende Gehäuserohr (13) über das Gehäuse (11) des Getriebes (12) um die etwa horizontal in Fahrtrichtung (5) angeordnete Achse (10) an dem Tragarm (6) schwenkbeweglich aufgehängt ist.

4. Mähwerk nach Anspruch 3, **dadurch gekennzeichnet, dass** die etwa horizontal in Fahrtrichtung (5) angeordnete Achse (10) mit einer Schwenkachse (7) zusammenfallend angeordnet ist, um die der Tragarm (6) relativ zu einem Schwingarm (4) hochschwenkbar ist.

5. Mähwerk nach Anspruch 1 oder 2, **dadurch gekennzeichnet, dass** bei einem Frontmähwerk (24) das die Antriebswelle (14) umgebende Gehäuserohr (13) um ein am Tragarm (6) vorgesehenes Lager (26) schwenkbar aufgehängt ist, wobei das Lager (26) relativ zu einer oder mehreren Keilriemenscheiben (25) auf dem Tragarm (6) angeordnet ist.

6. Mähwerk nach einem oder mehreren der Ansprüche 1 bis 5, **dadurch gekennzeichnet, dass** die Balkenstütze (18) in einer Vertikalebene (31) senkrecht zur Fahrtrichtung (5) federnd nachgiebig ausgebildet ist.

7. Mähwerk nach einem oder mehreren der Ansprüche 1 bis 6, **dadurch gekennzeichnet, dass** der Mähbalken (16) an der Balkenstütze (18) über ein Schwenklager (29) beweglich aufgehängt ist.

8. Mähwerk nach Anspruch 7, **dadurch gekennzeichnet, dass** das Schwenklager (29) so ausgebildet und angeordnet ist, dass es jedenfalls eine Bewegung um eine senkrecht zur Fahrtrichtung (5) liegende horizontale Achse (30) ermöglicht.
